# EUROPÄISCHE PATENTSCHRIFT

(11) **EP 1 479 260 B1**
(45) Veröffentlichungstag und Bekanntmachung des Hinweises auf die Patenterteilung: **07.06.2006**
(21) Anmeldenummer: 03722351.8
(22) Anmeldetag: 24.03.2003
(51) Int. Cl.: H04Q 9/00

(54) **FUNK-RUNDSTEUERUNGSSYSTEM UND VERFAHREN ZUM BETREIBEN EINES DERARTIGEN SYSTEMS**
WIRELESS REMOTE-CONTROL SYSTEM AND METHOD FOR OPERATING SAID SYSTEM
SYSTEME DE TELECOMMANDE CENTRALISEE PAR RADIO ET PROCEDE PERMETTANT DE FAIRE FONCTIONNER UN SYSTEME DE CE TYPE

(30) Priorität: 28.03.2002 DE 10214146
(43) Veröffentlichungstag der Anmeldung: 24.11.2004
(73) Patentinhaber: EFR Europaische Funk-Rundsteuerung GmbH, 80335 München (DE)
(72) Erfinder: WIENOLD, Heinrich, 80469 München (DE); BICKER, Roland, 85221 Dachau (DE); EIBL, Martin, 85459 Berglern (DE); SBICK, Bernhard, 10559 Berlin (DE)
(74) Vertreter: Manitz, Finsterwald & Partner GbR
(86) Internationale Anmeldenummer: PCT/EP2003/003053
(87) Internationale Veröffentlichungsnummer: WO 2003/084278

(56) Entgegenhaltungen:
- WO-A-00/76034
- WO-A-02/09467
- WO-A-91/13523

## Beschreibung

Die Erfindung betrifft ein Funk-Rundsteuerungssystem zur Steuerung einer Vielzahl von dezentralen Kunden-Endgeräten in Abhängigkeit von kundeninitiierten Sendewünschen mittels zentraler Langwellen-Sendeeinrichtungen mit den Merkmalen des Anspruchs 1.

Die Erfindung betrifft außerdem ein Verfahren zum Betreiben eines derartigen Funk-Rundsteuerungssystems mit den Merkmalen des Anspruchs 21.

Das Prinzip der Steuerung von Endgeräten mittels eines Langwellen-Rundsteuerungssystems ist grundsätzlich bekannt. Mit diesem System können mehrere Kunden eine gemeinsame Langwellen-Sendeeinrichtung nutzen, um eigene Endgeräte oder Endgeräte eigener Kunden zu steuern. Energieversorgungsunternehmen nutzen das Steuerungssystem zur Tarif- und Laststeuerung sowie zur Steuerung von Beleuchtungseinrichtungen wie beispielsweise Straßenbeleuchtungen.

Aus WO 91/13523 ist ein Steuerungs- und Nachrichtenübertragungssystem sowie ein entsprechendes Verfahren bekannt, das mehrere Sender aufweist, bei denen es sich nicht um Langwellen-Sender handelt. Es ist eine mit einem Zentralcomputer eines Kraftwerks verbundene zentrale Steuereinheit beispielsweise in Form eines PC's vorgesehen, die mit einem öffentlichen Personenrufsystem kommuniziert, das den jeweils gewünschten Sender anspricht, um bestimmte Mitteilungen an Gruppen von Konsumenten zu übertragen. In einem modifizierten Ausführungsbeispiel ist die zentrale Steuereinheit mit einem RDS-Kodierblock verbunden, der mit mehreren Computern in Verbindung steht, für welche bestimmte Daten in den RDS-Kodierblock eingegeben werden können. Die Zentraleinheit empfängt einerseits diejenigen Informationen, welche die Grundlage für die zu übertragenden Mitteilungen bilden, und gibt andererseits das Steuersignal für die Sender ab.

Die WO 02/09467 A1 betrifft ein System zur Femabfrage der von Verbrauchern bezogenen Energiemengen, wobei hierbei eingesetzte Datenüberrnittlungsgeräte mit dem Internet in Verbindung gebracht werden können.

Aufgabe der Erfindung ist es, ein Funk-Rundsteuerungssystem sowie ein Verfahren zum Betreiben eines derartigen Systems zu schaffen, wodurch es einer Vielzahl von Benutzern, die unterschiedliche Anforderungen an ein Funk-Rundsteuerungssystem stellen, ermöglicht wird, eine beliebige Anzahl von eigenen Endgeräten entweder einzeln oder gruppenweise gemäß individuellen Wünschen zu steuern, wobei das Funk-Rundsteuerungssystem insbesondere auf einfache Weise auf eine beliebige Anzahl von Benutzern mit jeweils einer beliebigen Anzahl von zu steuernden Endgeräten erweiterbar und dabei grundsätzlich für jedermann unabhängig von dessen Wohn- oder Firmensitz sowie unabhängig von den Standorten der zu steuernden Endgeräte offen sein soll.

Die Lösung dieser Aufgabe erfolgt durch die Merkmale des das Funk-Rundsteuerungssystem betreffenden Anspruchs 1.

Erfindungsgemäß wird durch das Vorsehen von zumindest zwei Langwellensendem, denen jeweils eine Zentraleinheit zur Steuerung des Sendebetriebs zugeordnet ist, in vorteilhafter Weise eine Dezentralisierung auch der für den Betrieb des Funk-Rundsteuerungssystems wesentlichen Zentral-Einrichtungen geschaffen.

Hierdurch wird eine besonders flexible Organisation des Rundsteuerungssystems ermöglicht. Die einzelnen Kunden bzw. die deren zu steuernden Endgeräten zugeordneten Funkempfänger können gezielt entsprechend einem individuell vorgebbaren Organisationsschema den einzelnen Zentraleinheiten zugeordnet werden. Insbesondere können solche Funkempfänger, die im Überlappungsbereich der Reichweiten mehrerer Langwellensender stationiert sind, wahlweise einem der Langwellensender zugeordnet werden.

Vorzugsweise sind die Funkempfänger nur für den Empfang einer einzigen Langwellenfrequenz ausgelegt.

Gemäß einem besonders bevorzugten Ausführungsbeispiel der Erfindung ist das Funk-Rundsteuerungssystem derart ausgelegt, dass die Kommunikationsverbindungen zwischen zumindest einigen der Kundenstationen und den Zentraleinheiten über das Internet aufgebaut werden können.

Durch die Einbeziehung des Internet wird das Funk-Rundsteuerungssystem in vorteilhafter Weise für jedermann geöffnet. Insbesondere wird es hierdurch ermöglicht, dass Privathaushalte bei minimalen Investitionskosten und zu erschwinglichen Nutzungsgebühren das Funk-Rundsteuerungssystem nutzen können, um beispielsweise eigene haustechnische Einrichtungen zu steuern.

Ferner ist erfindungsgemäß bevorzugt vorgesehen, dass die Kommunikationsverbindungen zwischen zumindest einigen der Kundenstationen und den Zentraleinheiten über ein bestehendes Telekommunikationsnetz aufgebaut werden können.

Dabei können für den Aufbau der Kommunikationsverbindungen nicht nur Telefon-Festnetze, sondern insbesondere auch Mobilfunknetze zum Einsatz kommen.

Ein Benutzer kann dadurch beispielsweise mit Hilfe seines Notebooks von prinzipiell jedem beliebigen Ort aus die Heizung seines Hauses ein- bzw. ausschalten oder eine bei Abwesenheit eine als Einbrecherschutz dienende Beleuchtungsautomatik aktivieren, deaktivieren oder umprogrammieren.

Grundsätzlich kommt erfindungsgemäß für die Kommunikation zwischen den Kundenstationen und den Zentraleinheiten jede zur Verfügung stehende Kommunikationsverbindung in Frage. So kann vorgesehen sein, dass zumindest einige der Kommunikationsverbindungen zwischen den Kundenstationen und den Zentraleinheiten unter Nutzung der Netze bzw. Protokolle Datex-P, ISDN, DSL, UMTS, GSM, GPRS, EDGE, 3GSM, X.25, X.75, IP und/oder TCP aufgebaut werden können.

Die kundenseitig für die Kommunikation mit den Zentraleinheiten benötigte Hardware beschränkt sich hierdurch auf das heutzutage ohnehin in praktisch jedem Haushalt vorhandene Minimum.

Ein besonders hohes Maß an Flexibilität wird erreicht, wenn gemäß einem weiteren bevorzugten Ausführungsbeispiel der Erfindung mit einem Sendewunsch gleichzeitig mehrere und insbesondere eine Vielzahl von Kunden-Endgeräten wahlweise einzeln oder gruppenweise steuerbar sind.

Vorzugsweise sind die Zentraleinheiten jeweils in räumlicher Nähe zu ihrem jeweiligen Langwellensender angeordnet. Dabei bilden eine Zentraleinheit und der dazu gehörige Langwellensender gemeinsam eine der zentralen Langwellen-Sendeeinrichtungen, wobei insgesamt innerhalb des erfindungsgemäßen Funk-Rundsteuerungssystems die Anzahl derartiger Langwellen-Sendeeinrichtungen grundsätzlich beliebig sein kann.

Ferner ist bevorzugt vorgesehen, dass wenigstens eine zentrale Kontrolleinheit vorgesehen ist, mit der Kommunikationsverbindungen zu allen Zentraleinheiten aufbaubar sind. Die Kontrolleinheit ist vorzugsweise von den Zentraleinheiten und den Langwellensendern räumlich getrennt.

Mittels der Kontrolleinheit kann das System überwacht und gewartet werden. Ferner ist es möglich, die Kontrolleinheit für solche Vorgänge wie z.B. Neukundenanmeldungen oder Änderungen von Kundendaten vorzusehen, die nicht automatisch alleine von den Zentraleinheiten durchgeführt werden können oder sollen. Die Kontrolleinheit zeichnet sich gegenüber den Kundenstationen bevorzugt insbesondere durch weitergehende Systemberechtigungen aus.

Wie bei einer der Kundenstationen kann von der Kontrolleinheit aus eine Kommunikationsverbindung zu jeder der Zentraleinheiten hergestellt und z.B. der Systemzustand der betreffenden Sendeeinrichtung überprüft werden. Unabhängig von der Anzahl der Langwellensender und Zentraleinheiten kann es genügen, wenn genau eine zentrale Kontrolleinheit vorgesehen ist, wobei es aber auch möglich ist, dass mehrere derartige Kontrolleinheiten - z.B. eine an jedem wichtigen Standort des Systembetreibers-vorhanden sind. Die oder jede Kontrolleinheit kann auch insofern mobil sein, als z.B. ein Notebook mit einer entsprechenden Kontrollsoftware als die zentrale Kontrolleinheit dient.

Gemäß einem weiteren bevorzugten Ausführungsbeispiel der Erfindung umfassen die Sendewünsche jeweils eine vorgebbare Sendepriorität und/oder gewünschte Sendezeit.

Hierdurch können die Kunden selbst festlegen, zu welchen Zeiten bestimmte Steuerungsvorgänge oder Schaltvorgänge an ihren Endgeräten erfolgen sollen. Dabei kann ferner vorgesehen sein, dass die Kunden die Prioritäten ihrer Sendewünsche selbst festlegen, wobei für unterschiedliche Prioritäten unterschiedlich hohe Nutzungsgebühren anfallen können. Der Kunde kann so selbst entscheiden, wie viel ihm eine prompte bzw. exakt entsprechend seinem Zeitwunsch erfolgende Aussendung der von ihm initiierten Funk-Steuertelegramme wert ist.

Alternativ oder zusätzlich kann vorgesehen sein, dass die Sendepriorität für jeden Kunden fest voreingestellt ist und vom Kunden nicht verändert werden kann. So kann z.B. Privatkunden grundsätzlich eine niedrigere Priorität eingeräumt werden als Großkunden wie beispielsweise Energieversorgungsuntemehmen oder Stadtwerken.

Diese Priorisierung der Sendewünsche, die grundsätzlich unabhängig von der tatsächlichen technischen Leistungsfähigkeit des Funk-Rundsteuerungssystems erfolgen kann, schafft in vorteilhafter Weise die Möglichkeit zu einer gezielten und insbesondere problemlos variierbaren Staffelung von Nutzungsgebühren.

Des Weiteren ist bei dem erfindungsgemäßen Funk-Rundsteuerungssystem vorzugsweise vorgesehen, dass bei den Zentraleinheiten eingehende, eine vorgegebene Sendepriorität aufweisende Sendewünsche automatisch zeitlich verzögerbar sind.

Hierdurch können Sendewünsche bewusst auch dann verzögert werden, wenn das System bzw. die betreffende Sendeeinrichtung nicht ausgelastet ist und der Sendewunsch auch mit sofortiger Wirkung unmittelbar nach Eingang bei der betreffenden Zentraleinheit ausgeführt werden könnte. Dies ist insbesondere in Verbindung mit einem nach unterschiedlichen Sendeprioritäten gestaffelten System von Nutzungsgebühren von Vorteil und ermöglicht auf diese Weise eine differenzierte Preispolitik und ein entsprechendes Marketing.

Besonders vielfältige Nutzungsmöglichkeiten für die Kunden werden geschaffen, wenn gemäß einer weiteren bevorzugten Ausführungsform der Erfindung mittels der Sendewünsche wahlweise eine einmalige oder periodische Aussendung von Funk-Steuertelegrammen initiiert werden kann. Dabei kann vorzugsweise im Fall einer einmaligen Aussendung wahlweise eine sofortige oder eine zu einem vorgebbaren Zeitpunkt erfolgende Aussendung initiiert werden.

Des Weiteren ist das erfindungsgemäße Funk-Rundsteuerungssystem in einer bevorzugten Ausführung derart ausgelegt, dass aufeinander folgende Funk-Steuertelegramme zumindest einer und bevorzugt jeder zentralen Langwellen-Sendeeinrichtung in einem zeitlichen Abstand von etwa 1 sec aussendbar sind.

Hierdurch wird ein besonders leistungsfähiges System bereitgestellt, mit dem auch eine große Anzahl von mehr oder weniger gleichzeitig Sendewünsche übermittelnden Benutzern bzw. Kunden bedient werden kann.

Bei den zu steuernden Endgeräten kann es sich grundsätzlich um beliebige technische Einrichtungen handeln, die ein- und ausgeschaltet bzw. programmiert oder parametrisiert werden können. Es kann sich um komplexe Anlagen zur Tarif- und Laststeuerung im Bereich von Energieversorgungsuntemehmen oder zur Steuerung von in den Verantwortungsbereich von städtischen Betrieben fallenden Straßenbeleuchtungen handeln.

Es kann sich bei den Endgeräten aber auch um technisch einfache Vorrichtungen wie z.B. herkömmliche Steckdosenleisten handeln, über die in Privathaushalten vorhandene elektrische Verbraucher ein- und ausgeschaltet werden.

Jedes Endgerät ist einem Funkempfänger zugeordnet, der in der Lage ist, die von den Langwellensendern ausgesandten Funk-Steuertelegramme zu empfangen, die in den Funk-Steuertelegrammen enthaltenen Informationen zu decodieren und diese Informationen so umzusetzen bzw. Steuersignale an die Endgeräte zu übermitteln, dass an dem jeweiligen Endgerät die gewünschten Steuerungs- und/oder Schaltvorgänge ausgelöst werden.

Die Funkempfänger können in die Endgeräte integriert sein. Alternativ ist auch eine räumlich getrennte Anordnung von Funkempfänger und Endgerät möglich. Ferner können einem Funkempfänger mehrere Endgeräte zugeordnet sein, um so eine gruppenweise Steuerung von Endgeräten zu ermöglichen. Eine gruppenweise Steuerung von Endgeräten kann alternativ auch dadurch erfolgen, dass jedem Endgerät ein eigener Funkempfänger zugeordnet ist und alle Funkempfänger gleichzeitig durch entsprechende Funk-Steuertelegramme angesprochen werden.

Bevorzugt erfolgt die Auswahl der benötigten Funkempfänger durch den Benutzer an der Kundenstation durch Eingabe der entsprechenden Funkempfänger-Adressen. Dabei können mehrere Funkempfänger dieselbe Adresse besitzen, so dass der Benutzer zur gleichzeitigen Steuerung mehrerer Funkempfänger lediglich eine einzige Adresse einzugeben braucht. Diese Adresse wird von der betreffenden Zentraleinheit nicht überprüft, sondern es erfolgt durch die Zentraleinheit und den betreffenden Langwellensender - ggf. nach Überprüfung der Berechtigung des betreffenden Kunden - automatisch die Aussendung des die Adresse enthaltenen Funk-Steuertelegramms, wodurch gleichzeitig die Mehrzahl von Funkempfängern angesprochen wird.

Bei den Endgeräten kann es sich insbesondere um für den Benutzer frei im Handel oder über den Betreiber des Funk-Rundsteuerungssystems erhältliche Geräte handeln, die zu auch für Privatpersonen akzeptablen Preisen erworben werden können.

In einer bevorzugten Ausführungsform der Erfindung sind als steuerbare Kunden-Endgeräte Schaltgeräte mit Schaltfunktionen vorgesehen, wobei bevorzugt die Schaltgeräte mittels der Funk-Steuertelegramme ein- und ausschaltbar sind.

Hierbei handelt es sich also um solche Endgeräte, die für einen Schaltvorgang ein empfangenes Funk-Steuertelegramm an ihrem Funkempfänger benötigen.

Dabei muss es sich bei den Endgeräten nicht um reine Schaltgeräte handeln, an die wiederum eine oder mehrere weitere Geräte angeschlossen sind, sondern es können über die Funkempfänger auch direkt haustechnische Einrichtungen wie beispielsweise die Hausbeleuchtung, elektrische Rolläden, Saunen oder Heizungsanlagen gesteuert werden.

Ferner muss es sich bei den mittels der Sendewünsche initiierbaren Steuerungsvorgängen an den Endgeräten nicht um reine Schaltvorgänge handeln. Es ist auch möglich, beispielsweise selbständig nach einem eigenen, endgerätespezifischen Zeitschaltschema automatisch arbeitende Geräte, z.B. Zeitschaltuhren für die Hausbeleuchtung, durch Aussendung eines kundeninitiierten Funk-Steuertelegramms aus der Ferne mit Hilfe des erfindungsgemäßen Funk-Rundsteuerungssystems umzuprogrammieren.

Des Weiteren können als steuerbare Kunden-Endgeräte Beleuchtungseinrichtungen vorgesehen sein, wie beispielsweise Straßen-, Laden-, Schaufenster- und Werbebeleuchtungen. Derartige Anwendungen sind insbesondere für gewerbliche Kunden wie beispielsweise Betreiber von Lebensmittel- oder Drogerieketten interessant.

Ferner können mit dem erfindungsgemäßen Funk-Rundsteuerungssystem auch für das öffentliche Gemeinwesen bedeutsame Einrichtungen gesteuert werden. So können beispielsweise durch Übermittlung eines einzigen Sendewunsches alle Sirenenanlagen einer Region oder eines Landes aktiviert werden.

In einem weiteren bevorzugten Ausführungsbeispiel der Erfindung ist vorgesehen, dass als steuerbare Kunden-Endgeräte Einrichtungen zur insbesondere optischen Anzeige oder Darstellung von mittels der Funk-Steuertelegramme übertragenen Informationen vorgesehen sind.

Derartige Endgeräte können z.B. Preisanzeigeeinrichtungen in Supermärkten sein. Die Supermarktbetreiber können die Erfindung dazu nutzen, im Fall von Preisänderungen die betreffenden Produkte einfach durch Initiieren eines entsprechenden Sendewunsches neu auszuzeichnen. Ein weiteres Beispiel für die Übertragung von Informationen mittels der Erfindung sind die aktuellen Wartezeiten an Haltestellen des öffentlichen Nahverkehrs.

Grundsätzlich eröffnet die erfindungsgemäße Möglichkeit, anzeigbare bzw. darstellbare Informationen wahlweise an prinzipiell beliebig viele Endgeräte oder gezielt an ein bestimmtes Endgerät mit Hilfe von Langwellen zu übermitteln, ein weites Feld von bislang nicht realisierbaren Anwendungen für ein breites Kundenspektrum.

Ein besonderer Vorteil des erfindungsgemäßen Funk-Rundsteuerungssystems vor allem für private Nutzer ist die Verwendung von Langwellen zur Steuerungssignalübertragung, da es aufgrund von deren Durchdringungsfähigkeit für praktisch keinen Installationsort der Funkempfänger zu Empfangsschwierigkeiten kommen kann. Die Funkempfänger können somit problemlos z.B. in Kellerräumen und so - beispielsweise zur Steuerung einer Heizungsanlage oder einer zentralen Steueranlage für mehrere haustechnische Einrichtungen - in unmittelbarer Nähe zu dem jeweils zu steuernden Endgerät angeordnet werden.

In dieser Hinsicht bietet das erfindungsgemäße, auf Langwellen basierende Rundsteuerungssystem erhebliche Vorteile gegenüber der Mobilfunktechnik, in der mit wesentlich kurzwelligerer elektromagnetischer Strahlung gearbeitet wird.

Eine besonders einfache und vergleichsweise kostengünstige Möglichkeit zur Übermittlung von Sendewünschen an die Zentraleinheiten wird dadurch geschaffen, dass gemäß einer weiteren bevorzugten Ausführung der Erfindung als Kundenstationen PCs und/oder Notebooks mit einer Software zur Eingabe und Übermittlung von Sendewünschen vorgesehen sind.

Die Lösung der der Erfindung zugrunde liegenden Aufgabe erfolgt außerdem durch die Merkmale des unabhängigen Verfahrensanspruchs 21.

Ein besonders einfacher und kundenfreundlicher Betrieb des erfindungsgemäßen Rundsteuerungssystems ergibt sich gemäß einer besonders bevorzugten Ausführungsform dann, wenn die zu steuernden Kunden-Endgeräte an den Kundenstationen ausgewählt werden und jeweils automatisch in Abhängigkeit von dem Standort des betreffenden Funkempfängers eine Kommunikationsverbindung zu der dem Funkempfänger zugeordneten Zentraleinheit aufgebaut wird.

Der Kunde braucht sich folglich keine Gedanken darüber zu machen, welcher der Zentraleinheiten sein zu steuerndes Endgerät jeweils zugeordnet ist.

Hierzu ist vorzugsweise jedem Funkempfänger eine Funkempfänger-Adresse zugeordnet und im System gespeichert, so dass durch Auswahl eines Funkempfängers an einer Kundenstation anhand der Adresse automatisch erkannt wird, zu welcher Zentraleinheit eine Kommunikationsverbindung aufgebaut werden muss, damit diese Zentraleinheit zur Aussendung des dem Sendewunsch entsprechenden Funk-Steuertelegramms den ihr zugeordneten Langwellensender ansteuern kann, über den der betreffende Funkempfänger erreichbar ist.

Ferner ist erfindungsgemäß bevorzugt vorgesehen, dass bei gleichzeitig mehrere Kunden-Endgeräte betreffenden Sendewünschen automatisch Kommunikationsverbindungen zu allen den betreffenden Funkempfängern zugeordneten Zentraleinheiten aufgebaut werden.

Hierdurch braucht sich der Benutzer auch in Fällen, in denen die zu seinem Sendewunsch gehörenden Funkempfänger nicht von einem einzigen Langwellensender alleine erreicht werden können oder - aufgrund eines vom Systembetreiber gewollten, dauerhaften oder vorübergehenden Systembetriebszustands - erreicht werden sollen, keine Gedanken darüber zu machen, mit wie vielen und mit welchen Zentraleinheiten er kommunizieren muss, damit sein Sendewunsch ordnungsgemäß ausgeführt wird.

Gemäß einem weiteren Ausführungsbeispiel der Erfindung ist vorgesehen, dass zumindest einer Zentraleinheit wenigstens zwei insbesondere am selben Ort befindliche Langwellensender zugeordnet sind, mit denen in Abhängigkeit von den Sendewünschen Funk-Steuertelegramme auf unterschiedlichen Langwellenfrequenzen gleichzeitig oder zeitversetzt ausgesandt werden, wobei vorzugsweise die Sendegebiete der Langwellensender im Wesentlichen identisch sind oder einander zumindest weitgehend überlappen.

Wenn man einen Langwellensender und eine von diesem genutzte Langwellenfrequenz als eine Funkzelle bezeichnet, dann wird durch diese Ausführungsform der Erfindung die Möglichkeit geschaffen, zur kundeninitiierten Steuerung von Kunden-Endgeräten mit mehreren Funkzellen zu arbeiten. Derartige Langwellen-Funkzellen können dabei nicht mit einer räumlich eng begrenzten Mobilfunkzelle verglichen werden, da bei dem erfindungsgemäßen Funk-Rundsteuerungssystem alle Funkzellen einer mehrere Langwellensender umfassenden Sendeeinrichtung das gleiche Sendegebiet abdecken können, wenn die Sendegebiete der Langwellensender einander zu 100% überlappen.

Durch die gleichzeitige oder zeitversetzte Nutzung mehrerer derartiger Funkzellen wird in vorteilhafter Weise eine weitere Differenzierungsmöglichkeit geschaffen und die Flexibilität sowie die Fähigkeit des Systems, auf die unterschiedlichsten Kundenwünsche zu reagieren, weiter erhöht.

Des Weiteren ist es gemäß einer weiteren Ausführungsform der Erfindung möglich, dass in Abhängigkeit von den Sendewünschen inhaltlich übereinstimmende Funk-Steuertelegramme mit unterschiedlichen Langwellenfrequenzen gleichzeitig oder zeitversetzt ausgesandt werden.

Die Funkzellen unterscheiden sich hierbei zwar hinsichtlich der verwendeten Langwellenfrequenzen und/oder der zur Aussendung genutzten Langwellensender, nicht jedoch hinsichtlich der zur Steuerung der Endgeräte an die Funkempfänger übertragenen Informationen.

Gemäß einem besonders bevorzugten Ausführungsbeispiel der Erfindung wird bei dem Betrieb des Funk-Rundsteuerungssystems zwischen Einzelkunden und Großkunden unterschieden, wobei den Einzelkunden wenigstens ein systemeigenes Portal, insbesondere ein Internet-Server; zur Verfügung gestellt wird und für Großkunden Kommunikationsanbindungen für kundeneigene Portale, insbesondere für kundeneigene Server, bereitgestellt werden.

Hierdurch besteht für Großkunden die Möglichkeit, selbst Funk-Rundsteuerungsdienste anzubieten und gewissermaßen auf das vom tatsächlichen Systembetreiber bereitgestellte erfindungsgemäße Funk-Rundsteuerungssystem derart aufzusetzen, dass für den Endkunden der tatsächliche Systembetreiber nicht erkennbar ist.

Eine besonders hohe Zuverlässigkeit und Genauigkeit der erfindungsgemäßen Funk-Rundsteuerung wird erreicht, wenn gemäß einer bevorzugten Ausführungsform die Funkempfänger mittels der Langwellensender in vorgebbaren Zeitabständen in Bezug auf ein vorgegebenes Zeitnormal synchronisiert werden.

Die Zuverlässigkeit und damit die Akzeptanz beim Kunden lässt sich weiter erhöhen, wenn gemäß einem besonders bevorzugten Ausführungsbeispiel die ausgesandten Funk-Steuertelegramme auf ihre korrekte Aussendung hin überprüft werden und ein als entweder überhaupt nicht oder als fehlerhaft ausgesandt identifiziertes Funk-Steuertelegramm wenigstens einmal erneut ausgesandt wird.

Hierzu kann beispielsweise am Ort jedes Langwellensenders ein Kontroll-Funkempfänger vorgesehen und mit der jeweiligen Zentraleinheit verbunden sein, mit dessen Hilfe die tatsächlich ausgesandten Ist-Telegramme mit den den Kundenwünschen entsprechenden Soll-Telegrammen verglichen werden.

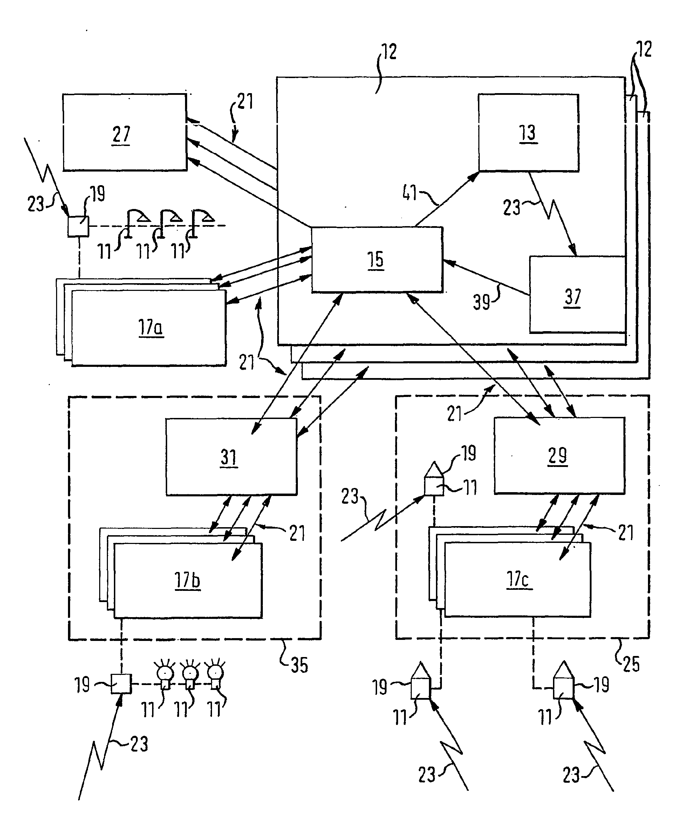

Weitere Ausführungsformen sowohl des erfindungsgemäßen Funk-Rundsteuerungssystems als auch des erfindungsgemäßen Verfahrens zum Betreiben eines derartigen Systems sind in den Unteransprüchen, der Beschreibung sowie der Zeichnung angegeben.

Die Erfindung wird im Folgenden beispielhaft unter Bezugnahme auf die Zeichnung beschrieben, deren einzige Figur rein schematisch den Aufbau und die Funktionsweise eines erfindungsgemäßen Funk-Rundsteuerungssystems veranschaulicht.

Das schematisch dargestellte erfindungsgemäße Funk-Rundsteuerungssystem umfasst drei Langwellen-Sendeeinrichtungen 12, die jeweils einen Langwellensender 13, eine Zentraleinheit in Form eines redundanten Parallelrechnersystems 15 sowie einen Kontroll-Funkempfänger 37 umfassen. Die Anzahl derartiger Sendeeinrichtungen 12 ist erfindungsgemäß grundsätzlich beliebig und von der Größe des abzudeckenden Sendegebiets abhängig. Die von den Langwellensendern 13 verwendeten Frequenzen sind vorzugsweise voneinander verschieden, um Störungen insbesondere in Überlappungsbereichen der Sendegebiete zu vermeiden.

Die Stationierung der Langwellensender 13 erfolgt bevorzugt derart, dass an jedem Punkt des abzudeckenden Sendegebiets ein zuverlässiger Empfang möglich ist, wobei Reichweitenüberlappungen möglichst klein ausfallen sollen. Um Deutschland abzudecken, genügen beispielsweise zwei Langwellensender, die in einem Frequenzbereich von 70 bis 150 kHz arbeiten und jeweils eine Reichweite von mehreren 100 km um den Senderstandort besitzen.

Die Übertragung der einem konkreten Sendewunsch entsprechenden Informationen an dezentral im Empfangsgebiet angeordnete Funkempfänger 19 erfolgt durch digitale Frequenzmodulation, digitale Amplitudenmodulation oder andere Modulationsverfahren des auch als Funk-Steuertelegramm 23 bezeichneten, in der Figur jeweils als gezackter Pfeil angedeuteten Langwellensignals.

Die Funkempfänger 19 weisen jeweils eine Decodereinheit auf, mit der die im empfangenen Langwellensignal enthaltenen Informationen gelesen werden können. Diese Informationen können nur von denjenigen Funkempfängern 19 genutzt werden, deren Adressen im jeweiligen Funk-Steuertelegramm 23 enthalten sind.

Dabei können mehrere Funkempfänger 19 die gleiche Adresse aufweisen, um beim Initiieren eines Sendewunsches zur gleichzeitigen Steuerung dieser Funkempfänger 19 nur eine einzige Funkempfänger-Adresse eingeben zu müssen.

Aufbau und Funktionsweise der Zentralrechner 15 sowie der Zweck des Kontroll-Empfängers 37 werden an anderer Stelle näher beschrieben.

Des Weiteren umfasst das erfindungsgemäße Funk-Rundsteuerungssystem eine Vielzahl von dezentralen oder abgesetzten Kundenstationen 17a, 17b, 17c. In dem dargestellten Ausführungsbeispiel wird zwischen verschiedenartigen Kundenstationen 17a, 17b, 17c unterschieden, wobei die Unterschiede in der Art und Weise der Anbindung an die Zentralrechner 15, in den Eigenschaften und/oder Anforderungen der Kunden, welche die Stationen 17a, 17b, 17c benutzen, und in der Motivation begründet sind, aufgrund welcher die Kunden die Stationen 17a, 17b, 17c und damit die erfindungsgemäße Rundsteuerung jeweils nutzen. Auch hierauf wird nachstehend näher eingegangen.

In der Figur sind zur Verdeutlichung der Organisation des erfindungsgemäßen Rundsteuerungssystems die Funkempfänger 19 jeweils in der Nähe der betreffenden Kundenstationen 17a, 17b, 17c dargestellt. Durch die jeweils auf die Funkempfänger 19 gerichteten, die Funk-Steuertelegramme 23 repräsentierenden gezackten Pfeile ist in der Figur klargestellt, dass die von den Langwellensendern 13 ausgesandten Funk-Steuertelegramme 23 von allen im jeweiligen Sendegebiet liegenden Funkempfängern 19 empfangen werden können, sofern die Funk-Steuertelegramme 23 die entsprechende Funkempfänger-Adresse enthalten.

Das Funk-Rundsteuerungssystem umfasst ferner eine einzige Kontrolleinheit 27, die mit jedem der Zentralrechner 15 kommunizieren kann.

Die Kundenstationen 17a, 17b, 17c und die Kontrolleinheit 27 sind in Form von PCs oder Notebooks vorgesehen und können hinsichtlich der zur Nutzung des Rundsteuerungssystems ablaufenden Software in weiten Teilen übereinstimmen, wobei jedoch über die Kontrolleinheit 27 eine Systemüberwachung, -pflege und -verwaltung möglich ist, die den die normalen Kundenstationen 17a, 17b, 17c nutzenden Kunden verwehrt ist.

Bevorzugt werden alle Funktionen, welche die Kunden von den Kundenstationen 17a, 17b, 17c aus nutzen können, automatisch alleine von den Zentralrechnern 15 übernommen, d.h. für den normalen Kundenbetrieb ist die zentrale Kontrollstation 27 nicht erforderlich. Insbesondere sind für den normalen Betrieb keine Kommunikationsverbindungen zwischen den Kundenstationen 17a, 17b 17c einerseits und der Kontrollstation 27 andererseits erforderlich.

Die Kommunikationsverbindungen 21 zwischen den Kundenstationen 17a, 17b, 17c und der Kontrolleinheit 27 auf der einen und den Zentralrechnern 15 auf der anderen Seite sind in der Figur durch Doppelpfeile angedeutet. Mit Ausnahme der in der Figur oben links dargestellten Kundenstationen 17a kann dabei an jeder Kundenstation 17b, 17c eine Kommunikationsverbindung 21 zu jeder der Zentraleinheiten 15 aufgebaut werden.

Bei den erwähnten, nur mit einem der Zentralrechner 15 kommunizierenden Kundenstationen 17a ist es aus systemorganisatorischen Gründen nicht erforderlich oder nicht gewollt, dass eine Kommunikation auch mit den anderen Zentraleinheiten 15 erfolgt, und die Darstellung auch dieser Kundenstationen 17a in der Figur soll die Flexibilität und die mannigfaltigen Nutzungsmöglichkeiten des erfindungsgemäßen Rundsteuerungssystems veranschaulichen. Bei diesen nur mit einem Zentralrechner 15 kommunizierenden Kundenstationen 17a kann es sich beispielsweise um voll funktionsfähige Altgeräte handeln, deren Umrüstung nicht erforderlich oder nicht gewollt ist. Die Kommunikation zwischen diesen Kundenstationen 17a und dem betreffenden Zentralrechner 15 erfolgt über das Datex-P-Netz (X.25).

Bei den in der Figur unten rechts dargestellten Kundenstationen 17c erfolgt der Aufbau der Kommunikationsverbindungen 21 zu den einzelnen Zentralrechnern 15 jeweils unter Nutzung des Internet 25. Dabei wird für einen insbesondere von Privatkunden gebildeten Kundenkreis ein systemeigenes Portal in Form eines Internet-Servers 29 bereitgestellt, bei dem sich die Kunden mittels ihres eigenen, als Kundenstation 17c dienenden PCs oder Notebooks über das normale Telefon-Festnetz oder ein Mobilfunknetz einwählen können, um Sendewünsche an den oder die Zentraleinheiten 15 zu übermitteln. Die Kunden benötigen folglich lediglich einen "internetfähigen" Rechner 17c, jedoch keine Spezialsoftware, die ausschließlich zur Nutzung des erfindungsgemäßen Funk-Rundsteuerungssystems dient.

Für einen anderen, insbesondere von Großkunden, die wiederum eigene Endkunden bedienen, gebildeten und in der Figur unten links dargestellten Kundenkreis besteht die Möglichkeit, über ein großkundeneigenes Portal 31 - insbesondere in Form eines großkundeneigenen Servers, bei dem sich die Endkunden wiederum über eigene PCs bzw. Notebooks 17b unter Nutzung eines normalen Telekommunikationsnetzes 21 und/oder eines vom Großkunden selbst betriebenen oder bereitgestellten Großkundennetz 35 einwählen können - mit den Zentralrechnern 15 des erfindungsgemäßen Funk-Rundsteuerungssystems zu kommunizieren.

Hierbei tritt der tatsächliche Betreiber des Rundsteuerungssystems nicht direkt dem Endkunden gegenüber als Systembetreiber auf, sondern das Rundsteuerungssystem wird von den Großkunden dazu genutzt, selbst Funk-Rundsteuerungsdienstleistungen für Endkunden anzubieten.

Von den Kunden wird das erfindungsgemäße Funk-Rundsteuerungssystem dazu genutzt, eigene Endgeräte 11 zu steuern, indem beispielsweise Ein- und Ausschaltvorgänge ausgelöst oder Programmierungen bzw. Parametrisierungen an den Endgeräten 11 vorgenommen werden.

Dabei ist entweder jedem Endgerät 11 oder einer Gruppe von Endgeräten 11 jeweils ein Funkempfänger 19 zugeordnet, der von den Langwellensendern 13 ausgesandte Funk-Steuertelegramme 23 empfängt und aufgrund der in diesen Telegrammen enthaltenen Informationen die Steuerungsvorgänge auslöst, wodurch die zuvor über die Kundenstationen 17a, 17b, 17c auf Veranlassung des Kunden an die Zentralrechner 15 übermittelten Sendewünsche ausgeführt werden.

Beispielsweise Stadtwerke können so auf einfache Weise Straßenbeleuchtungen straßenzugweise ein- und ausschalten, wie es schematisch oben links in der Figur dargestellt ist.

Gewerbliche Kunden, wie beispielsweise Betreiber von Ladenketten, können mittels der erfindungsgemäßen Funk-Rundsteuerung automatisch Beleuchtungseinrichtungen z.B. zur Schaufensterbeleuchtung in allen ihren Läden gleichzeitig ein- und ausschalten, wie es unten links in der Figur angedeutet ist.

Privatkunden eröffnet das erfindungsgemäße Funk-Rundsteuerungssystem die Möglichkeit, unter Nutzung des Internet 25 z.B. haustechnische Einrichtungen 11 zu steuern, wie es in der Figur unten rechts angedeutet ist. Hierzu kann es genügen, lediglich einen Funkempfänger 19 zu installieren und das oder die zu steuernden Endgeräte 11 mit diesem Funkempfänger 19 zu verbinden. Alternativ kann für jedes Endgerät 11 im Haus ein eigener Funkempfänger 19 vorgesehen sein.

Der Benutzer kann mit seinem PC oder Notebook 17c alle oder gezielt einzelne Funkempfänger 19 auswählen und entsprechende Sendewünsche über den das Systemportal bildenden Internet-Server 29 an die betreffenden Zentralrechner 15 übermitteln. Dabei spielt es keine Rolle, ob sich der Benutzer im Haus oder an einem anderen Ort aufhält, da durch die Nutzung des Internet 25 die Zentralrechner 15 von jedem beliebigen Ort aus kontaktiert werden können.

Aufbau und Betrieb des erfindungsgemäßen Funk-Rundsteuerungssystems können beispielsweise derart erfolgen, wie es nachstehend beschrieben ist.

Bei den Zentraleinheiten 15 handelt es sich jeweils um ein redundantes Rechnersystem mit einem Hauptrechner und einem Parallelrechner. Beide Rechner umfassen jeweils eine physikalisch eigenständige Funktionseinheit mit vier Hauptfunktionen, die als Bussystem, Steuerrechner, Kontrollrechner und Gebührenrechner bezeichnet werden, da der Zentralrechner 15 alle diese Funktionen in sich vereinigt.

Das Bussystem bzw. der entsprechende Funktionsabschnitt des Zentralrechners 15 dient zur Vermittlung der logischen Kommunikationskanäle 21 zwischen den abgesetzten Kundenstationen 17a, 17b, 17c und den einzelnen Funktionsabschnitten des Zentralrechners 15 sowie zwischen den einzelnen Funktionsabschnitten des Zentralrechners 15 untereinander. Ferner wird durch das Bussystem der jeweils aktuelle Parametersatz des Zentralrechners 15 geführt. Die Bussystem-Funktion übernimmt ferner Steuerungs- und Überwachungsfunktionen für den Zentralrechner 15, erfasst unzulässige Anforderungsversuche und führt ein lokales Betriebstagebuch.

Der Steuerrechner bzw. der entsprechende Funktionsabschnitt des Zentralrechners 15 sorgt für die Ansteuerung des jeweiligen Langwellensenders 13. Mittels der Steuerrechner-Funktion erfolgen die Entgegennahme der Kundendatenpakete, d.h. der Sendewünsche, mit denen die Funkempfänger 19 gesteuert bzw. programmiert werden sollen, die zur Aussendung der Funk-Steuertelegramme 23 erforderliche Übermittlung der entsprechenden Steuerbefehle 41 an die Langwellensender 13, die Entgegennahme von Parametrieranweisungen der Bussystem-Funktion sowie die Rückmeldung des Systemzustands, das Erfassen von Betriebsdaten und das Führen eines lokalen Betriebstagebuchs.

Durch den Kontrollrechner bzw. den entsprechenden Funktionsabschnitt des Zentralrechners 15 wird der Sendebetrieb überwacht, wobei auf der Basis der durch die Kontrollrechner-Funktion erfassten Betriebsdaten der tatsächliche Sendebetrieb zu einem späteren Zeitpunkt rekonstruiert werden kann.

Mit Hilfe der Kontrollrechner-Funktion erfolgen insbesondere der Soll-Ist-Vergleich der ausgesandten Funk-Steuertelegramme 23, die Überwachung des Betriebszustands des Langwellensenders 13, das Erfassen von den eigentlichen Sendebetrieb betreffenden Daten, die Entgegennahme von Parametrieranweisungen der Bussystem-Funktion sowie das Führen eines lokalen Betriebstagebuchs.

Der Gebührenrechner bzw. der entsprechende Funktionsabschnitt des Zentralrechners 15 dient dazu, die von den Kundenstationen 17 sowie von der systemeigenen zentralen Kontrolleinheit 27 stammenden Sendeanforderungen zu überwachen. Dabei werden insbesondere die für eine korrekte Abrechnung erforderlichen Verrechnungsdaten erfasst. Des Weiteren nimmt die Gebührenrechner-Funktion Parametrieranweisungen der Bussystem-Funktion entgegen und führt ein lokales Betriebstagebuch.

Die Zentralrechner 15 des erfindungsgemäßen Funk-Rundsteuerungssystems zeichnen sich insbesondere durch die Verwendung eines multitasking- sowie echtzeitfähigen Betriebssystems aus, wodurch sich eine besonders hohe Zeitgenauigkeit bei der Aussendung der Funk-Steuertelegramme 23 erzielen lässt. Ferner besitzt jeder Zentralrechner 15 ein Adressierungsvolumen von beispielsweise 64.000 Einzeladressen, wobei in Abhängigkeit von der Anzahl der im Empfangsgebiet stationierten Funkempfänger 19 das Adressierungsvolumen grundsätzlich jede beliebige Größe aufweisen kann.

Die Kundenstationen 17a,17b, 17c bzw. die auf den Kundenstationen und/oder den Zentraleinheiten 15 installierte Software ist derart ausgelegt, dass die Aussendung der Funk-Steuertelegramme 23 anhand einer Zeitliste erfolgt, wobei die Funk-Steuertelegramm-Datenbank skalierbar ist. Ferner ermöglichen die Kundenstationen 17a, 17b, 17c eine weitgehende Kunden-Administration, überwachen die Systemzustände, sorgen für eine Protokollierung, besitzen eine Web-Server-Funktionalität, dienen als Kommunikationsschnittstelle zu Netzleitsysteme und ermöglichen insbesondere eine Prozessankopplung an analoge oder digitale Messgeber über ein entsprechend ausgebildetes IO-Interface.

Über die Messgeber können beispielsweise die am Ort der zu steuernden Beleuchtungseinrichtungen - z.B. Straßenbeleuchtungen - herrschenden Lichtverhältnisse erfasst und an die jeweilige Kundenstation 17a, 17b, 17c übermittelt werden, an der automatisch bei Erreichen vorgegebener Schwellenwerte ein Sendewunsch zum Ein- bzw. Ausschalten der Beleuchtungseinrichtungen an den oder die betreffenden Zentralrechner 15 übermittelt wird.

Hinsichtlich der Benutzung oder Bedienung des erfindungsgemäßen Funk-Rundsteuerungssystems wird zwischen verschiedenen Zugriffsberechtigungen unterschieden. Die Kunden des Systems haben über die Kundenstationen 17a, 17b, 17c Zugriff auf die Abfrage des Systemzustands sowie auf die Übermittlung von Sendewünschen und damit auf die Programmierung von Funk-Steuertelegrammen. Dies gilt jedoch nur in Bezug auf diejenigen Anwendungsadressen, die für den jeweiligen Kunden freigegeben sind, wobei die Freigabe der Anwendungsadressen dem Systembetreiber vorbehalten ist.

Der Systembetreiber bzw. dessen Systemadministratoren haben über die zentrale Kontrolleinheit 27 freien Zugriff auf sämtliche Funktionen des Rundsteuerungssystems, d.h. auf die Abfrage des Systemzustands, auf die Programmierung von Funk-Steuertelegrammen 23 für alle vorhandenen Anwendungsadressen sowie auf die eigentliche System-Administration einschließlich der Kundenverwaltung.

Des Weiteren ist eine Wartungsberechtigung definiert, die ausschließlich Zugriff auf die Abfrage des Systemzustands hat. Diese Wartung dient insbesondere zur Alarmierung im Fall einer im System auftretenden Fehlfunktion.

Zur Überwachung der einzelnen Zugriffsberechtigungen durch das System bestehen die folgenden Sicherheitsvorkehrungen: Bei einem Zugriff auf das System über Datex-P (X.25) ist lediglich die Datex-P-Adresse für eine eindeutige Identifizierung des Kunden erforderlich. Die einzelnen Datex-P-Adressen der Kunden werden vom Systembetreiber verwaltet, wobei die Datex-P-Adresse des Systembetreibers selbst entweder - und dies ist die bevorzugte Vorgehensweise - über die zentrale Kontrolleinheit 27 oder durch eine Vor-Ort-Bedienung, d.h. am Ort des betreffenden Zentralrechners 15, geändert werden kann.

Auf allen anderen Kommunikationsverbindungen 21 wird die Zugriffsberechtigung durch ein "LOGIN" sowie die Verschlüsselung der Kommunikation (z.B. 128 Bit) sichergestellt, wobei die Namen, Passwörter und Berechtigungen der Kunden in den Zentralrechnern 15 gespeichert werden und im Bedarfsfall über die systemeigene Kontrolleinheit 27 verwaltet werden können.

Bei der Kommunikation zwischen den Kundenstationen 17a, 17b, 17c und der Kontrolleinheit 27 auf der einen Seite und den Zentralrechnern 15 auf der anderen Seite werden an den Zentralrechnern 15 jeweils die ankommenden Anforderungen nach bestimmten Kriterien überprüft und gegebenenfalls zurückgewiesen. Neben der formalen Richtigkeit müssen die Anforderungen vorgegebene Berechtigungen und Einschränkungen einhalten.

Anforderungen, welche nicht die notwendige Berechtigung aufweisen oder welche die momentan gültigen Einschränkungen verletzen, werden mit einer entsprechenden Fehlermeldung zurückgewiesen. Dabei führt der Zentralrechner 15 ein Protokoll über unzulässige Anforderungsversuche.

Im Rahmen der vom Systembetreiber den Kunden gegenüber abgegebenen Garantien müssen die Zentralrechner 15 jeweils in der Lage sein, eine Vielzahl von Kunden und damit eine Vielzahl von logischen Kommunikationskanälen oder Kommunikationsverbindungen 21 praktisch gleichzeitig zu bedienen. Dabei ist der für einen Zentralrechner 15 "kritischste" Fall gegeben, wenn eine Vielzahl von beispielsweise 30 Kunden gleichzeitig einen Sendewunsch der höchsten Priorität und für die sofortige, einmalige Aussendung eines Funk-Steuertelegramms 23 übermitteln.

Die Zentralrechner 15 sind jeweils so ausgelegt, dass derartige Sendewünsche von den Kundenstationen 17a, 17b, 17c zwar laufend entgegengenommen werden, jedoch gemäß einer bestimmten Prioritätsordnung behandelt werden. Diese Prioritätsordnung besteht darin, dass Sendewünsche für die sofortige, einmalige Aussendung eines Steuertelegramms eine höhere Priorität besitzen als alle übrigen Sendewünsche, wobei innerhalb dieser grundsätzlich prioritätshöchsten Sendewünsche sich die Behandlungspriorität nach den jeweils in den einzelnen Sendewünschen enthaltenen Sendeprioritäten richtet.

Im Zusammenhang mit der Programmierung von Funk-Steuertelegrammen 23 bzw. der Entgegennahme der Sendewünsche übernehmen die Zentralrechner 15 jeweils die im Folgenden genannten Einzelaufgaben. Die für die einzelnen Sendewünsche vorgesehenen Speicherplätze werden organisiert und verwaltet. Ferner erfolgt eine Überwachung hinsichtlich der Zulässigkeit der Sendewünsche, wobei sowohl bezüglich erfolgreicher als auch bezüglich abgelehnter Sendewünsche eine Rückmeldung an die jeweilige Kundenstation 17a, 17b, 17c erfolgt.

Der Kunde kann unter verschiedenen Klassen von Sendewünschen auswählen. So können Funk-Steuertelegramme 23 entweder (i) sofort und einmalig, (ii) einmalig und zu einem bestimmten Zeitpunkt, (iii) periodisch monatlich, (iv) periodisch wöchentlich, (v) periodisch täglich oder (vi) periodisch stündlich ausgesandt werden. Ferner steht (vii) eine zusätzliche Funktion zur Verfügung, die darin besteht, dass beispielsweise zu TestZwecken periodisch z.B. alle 15 min ein zusätzliches Steuertelegramm ausgesandt wird. Diese Zusatz-Funktion kann dem Systembetreiber vorbehalten sein und in diesem Fall lediglich über die systemeigene Kontrolleinheit 27 ausgewählt werden.

Die Speicherplatzverwaltung in den Zentralrechnern 15 berücksichtigt die den einzelnen Sendewunsch-Klassen innewohnenden Besonderheiten. So bleibt beispielsweise ein Speicherplatz für eine sofortige, einmalige Aussendung lediglich für einen sehr kurzen Zeitraum "belegt". Speicherplätze für Sendewünsche, mit denen jeweils die einmalige Aussendung eines Funk-Steuertelegramms zu einem bestimmten Zeitpunkt angefordert wird, werden wieder "frei", wenn der jeweils im Sendewunsch enthaltene Zeitpunkt erreicht ist.

Während des Betriebs überwachen die Zentralrechner 15 jeweils ununterbrochen die in den Speicherplätzen hinterlegten Sendewünsche bzw. Anforderungen für Funk-Steuertelegramme 23, wobei lediglich die den Status "belegt" aufweisenden Speicherplätze von Interesse sind. Ein Sendewunsch bzw. eine Anforderung wird fällig, wenn Datum und Uhrzeit des Zentralrechners 15 mit den im Speicherplatz hinterlegten, die Fälligkeit beschreibenden Daten übereinstimmen.

Fällig gewordene Sendewünsche werden entsprechend ihrer Priorität in einen der vorgesehenen Prioritätspuffer übertragen, wobei die Prioritätspuffer vom Typ FIFO-Puffer sind.

Hinsichtlich der Ansteuerung des jeweiligen Langwellensenders 13 bzw. der Schnittstelle zum Langwellensender 13 ist vorgesehen, dass vom Zentralrechner 15 ein neues Funk-Steuertelegramm 23 für die Aussendung bereitgestellt wird, d.h. die entsprechenden Steuerbefehle 41 an den Langwellensender 13 übermittelt werden, sobald ein Funk-Steuertelegramm 23 ausgesandt worden ist. Dabei wird den Prioritätspuffern jeweils der die höchste Priorität aufweisende wartende Sendewunsch entnommen und in Steuerbefehle 41 umgewandelt. Die dem zu sendenden Funk-Steuertelegramm 23 entsprechenden Steuerbefehle 41 werden bitweise über eine RS232-Schnittstelle an den Langwellensender 13 übertragen.

Um die im Empfangsgebiet stationierten Funkempfänger 19 zu synchronisieren, werden die Langwellensender 13 von ihren Zentralrechnern 15 in vordefinierten Zeitabständen zur Aussendung von so genannten Zeit-Telegrammen veranlasst.

Wie bereits im einleitenden Teil der Beschreibung erwähnt, kann die Aussendung von Funk-Steuertelegrammen 23 in Abhängigkeit von der Priorität der betreffenden Sendewünsche um eine einstellbare Zeit verzögert werden. Die Dauer der Verzögerung kann in Abhängigkeit von den einzelnen Prioritäten und/ oder kunden-spezifisch oder kundenklassen-spezifisch vorgegeben werden.

Um eine hohe Qualität der vom Systembetreiber angebotenen Dienstleistungen zu gewährleisten, ist ein Soll-Ist-Vergleich der ausgesandten Funk-Steuertelegramme 23 vorgesehen. Dieser Soll-Ist-Vergleich dient dazu, insbesondere kurzzeitige Fehlfunktionen der Langwellensender 13 dadurch zu kompensieren, dass falsch ausgesandte Funk-Steuertelegramme 23 automatisch zum einen überhaupt als solche erkannt und zum anderen erneut ausgesandt werden.

Hierzu werden von den Zentralrechnern 15 jeweils die an den Langwellensender 13 übermittelten, dem zugrunde liegenden Sendewunsch entsprechenden Steuerbefehle 41 ("Soll") sowie mit Hilfe des Kontroll-Funkempfängers 37 das tatsächlich vom Langwellensender 13 ausgesandte Funk-Steuertelegramm 23 ("Ist") erfasst, indem ein so genanntes Ist-Telegramm 39 vom Kontroll-Funkempfänger 37 an den Zentralrechner 15 übermittelt wird.

Diese beiden Signale werden vom Zentralrechner 15 bitweise miteinander verglichen. Im Fall einer Nicht-Übereinstimmung werden die dem gewünschten Funk-Steuertelegramm 23 entsprechenden Steuerbefehle 41 erneut an den Langwellensender 13 übermittelt. Dabei kann die Anzahl der maximal erfolgenden Wiederholungen desselben Funk-Steuertelegramms 23 grundsätzlich beliebig voreingestellt werden.

### Bezugszeichenliste

- 11: Kunden-Endgerät
- 12: Sendeeinrichtung
- 13: Langwellensender
- 15: Zentraleinheit, Zentralrechner
- 17a, 17b, 17c: Kundenstation
- 19: Funkempfänger
- 21: Kommunikationsverbindung
- 23: Funk-Steuertelegramm
- 25: Internet
- 27: zentrale Kontrolleinheit
- 29: systemeigenes Portal
- 31: kundeneigenes Portal
- 35: Kundennetz
- 37: Kontroll-Funkempfänger
- 39: Ist-Telegramm
- 41: Steuerbefehle

## Patentansprüche

1. Funk-Rundsteuerungssystem zur Steuerung einer Vielzahl von dezentralen Kunden-Endgeräten (11) in Abhängigkeit von kundeninitiierten Sendewünschen mittels zentraler Langwellen-Sendeeinrichtungen (12), mit
- wenigstens zwei zentralen, unabhängig voneinander betreibbaren Langwellensendern (13),
- zumindest zwei jeweils einem der Langwellensender (13) zugeordneten Zentraleinheiten (15), die jeweils zur Steuerung des Sendebetriebs wenigstens eines Langwellensenders (13) in Abhängigkeit von den kundeninitiierten Sendewünschen ausgebildet sind,
- einer Vielzahl von dezentralen, jeweils zur Übermittlung der kundeninitiierten Sendewünsche an jede der Zentraleinheiten (15) ausgebildeten Kundenstationen (17b, 17c), und
- einer Vielzahl von dezentralen, im Empfangsgebiet stationierten Funkempfängern (19), denen jeweils wenigstens ein zu steuerndes Kunden-Endgerät (11) zugeordnet ist und die in Abhängigkeit von ihrem Standort jeweils zumindest einer der Zentraleinheiten (15) zugeordnet sind,
wobei die jeweils zumindest einen Funkempfänger (19) betreffenden Sendewünsche über an den Kundenstationen (17b, 17c) aufbaubare Kommunikationsverbindungen (21) automatisch an die entsprechende Zentraleinheit (15) übermittelbar sind, die den Sendebetrieb desjenigen Langwellensenders (13) steuert, dessen Funk-Steuertelegramme von dem jeweils gewünschten Funkempfänger empfangen werden können, und
wobei den Sendewünschen entsprechende Funk-Steuertelegramme (23) automatisch in Abhängigkeit von mittels der Zentraleinheiten (15) erzeugten und an die Langwellensender (13) übermittelten Steuerbefehlen (41) aussendbar sind.

2. System nach Anspruch 1,
**dadurch gekennzeichnet,**
**dass** die Kommunikationsverbindungen (21) zwischen zumindest einigen der Kundenstationen (17b, 17c) und den Zentraleinheiten (15) über das Internet (25) aufbaubar sind.

3. System nach Anspruch 1 oder 2,
**dadurch gekennzeichnet,**
**dass** die Kommunikationsverbindungen (21) zwischen zumindest einigen der Kundenstationen (17b, 17c) und den Zentraleinheiten (15) über ein bestehendes Telekommunikationsnetz aufbaubar sind, insbesondere über ein Telefon-Festnetz und/oder ein Mobilfunknetz.

4. System nach einem der vorhergehenden Ansprüche,
**dadurch gekennzeichnet,**
**dass** zumindest einige der Kommunikationsverbindungen (21) zwischen den Kundenstationen (17b, 17c) und den Zentraleinheiten (15) unter Nutzung der Netze bzw. Protokolle Datex-P, ISDN, DSL, UMTS, GSM, GPRS, EDGE, 3GSM, X.25, X.75, IP und/oder TCP aufbaubar sind.

5. System nach einem der vorhergehenden Ansprüche,
**dadurch gekennzeichnet,**
**dass** mit einem Sendewunsch gleichzeitig mehrere und insbesondere eine Vielzahl von Kunden-Endgeräten (11) wahlweise einzeln oder gruppenweise steuerbar sind.

6. System nach einem der vorhergehenden Ansprüche,
**dadurch gekennzeichnet,**
**dass** die Zentraleinheiten (15) in räumlicher Nähe zu ihrem jeweiligen Langwellensender (13) angeordnet sind.

7. System nach einem der vorhergehenden Ansprüche,
**dadurch gekennzeichnet,**
**dass** wenigstens eine zentrale Kontrolleinheit (27) vorgesehen ist, mit der Kommunikationsverbindungen (21) zu allen Zentraleinheiten (15) aufbaubar sind, wobei vorzugsweise die Kontrolleinheit (27) von den Zentraleinheiten (15) und den Langwellensendern (13) räumlich getrennt ist.

8. System nach einem der vorhergehenden Ansprüche,
**dadurch gekennzeichnet,**
**dass** die Zentraleinheiten (15) jeweils ein redundantes Rechnersystem mit einem Hauptrechner und wenigstens einem Parallelrechner umfassen.

9. System nach einem der vorhergehenden Ansprüche,
**dadurch gekennzeichnet,**
**dass** die Sendewünsche jeweils eine vorgebbare Sendepriorität und/oder gewünschte Sendezeit umfassen.

10. System nach Anspruch 9,
**dadurch gekennzeichnet,**
**dass** die Sendewünsche mittels der Zentraleinheiten (15) automatisch in eine von den Sendeprioritäten und/oder von den gewünschten Sendezeiten abhängige Sendereihenfolge bringbar sind.

11. System nach einem der vorhergehenden Ansprüche,
**dadurch gekennzeichnet,**
**dass** bei den Zentraleinheiten (15) eingehende, eine vorgegebene Sendepriorität aufweisende Sendewünsche automatisch zeitlich verzögerbar sind.

12. System nach einem der vorhergehenden Ansprüche,
**dadurch gekennzeichnet,**
**dass** mittels der Sendewünsche wahlweise eine einmalige oder periodische Aussendung von Funk-Steuertelegrammen (23) initiierbar ist, wobei vorzugsweise im Fall einer einmaligen Aussendung wahlweise eine sofortige oder eine zu einem vorgebbaren Zeitpunkt erfolgende Aussendung initiierbar ist.

13. System nach einem der vorhergehenden Ansprüche,
**dadurch gekennzeichnet,**
**dass** aufeinander folgende Funk-Steuertelegramme (23) zumindest einer und bevorzugt jeder zentralen Langwellen-Sendeeinrichtung (12) in einem zeitlichen Abstand von etwa 1 sec aussendbar sind.

14. System nach einem der vorhergehenden Ansprüche,
**dadurch gekennzeichnet,**
**dass** als steuerbare Kunden-Endgeräte (11) Schaltgeräte mit Schaltfunktionen vorgesehen sind, wobei bevorzugt die Schaltgeräte mittels der Funk-Steuertelegramme (23) ein- und ausschaltbar sind.

15. System nach einem der vorhergehenden Ansprüche,
**dadurch gekennzeichnet,**
**dass** als steuerbare Kunden-Endgeräte (11) haustechnische Einrichtungen vorgesehen sind, insbesondere schalt-, programmier- und/oder parametrisierbare Einrichtungen in Privathaushalten.

16. System nach einem der vorhergehenden Ansprüche,
**dadurch gekennzeichnet,**
**dass** als steuerbare Kunden-Endgeräte (11) Beleuchtungseinrichtungen vorgesehen sind, insbesondere Straßen-, Laden-, Schaufenster- und Werbebeleuchtungen.

17. System nach einem der vorhergehenden Ansprüche,
**dadurch gekennzeichnet,**
**dass** als steuerbare Kunden-Endgeräte (11) optische und/oder akustische Signaleinrichtungen vorgesehen sind, insbesondere Sirenenanlagen.

18. System nach einem der vorhergehenden Ansprüche,
**dadurch gekennzeichnet,**
**dass** als steuerbare Kunden-Endgeräte (11) Einrichtungen zur insbesondere optischen Anzeige oder Darstellung von mittels der Funk-Steuertelegramme (23) übertragenen Informationen vorgesehen sind.

19. System nach einem der vorhergehenden Ansprüche,
**dadurch gekennzeichnet,**
**dass** die Kundenstationen (17b, 17c) PCs und/oder Notebooks mit einer Software zur Eingabe und Übermittlung von Sendewünschen umfassen.

20. Verfahren zum Betreiben eines Funk-Rundsteuerungssystems, mit dem mittels zentraler Langwellen-Sendeeinrichtungen (12) eine Vielzahl von dezentralen Kunden-Endgeräten (11) in Abhängigkeit von kundeninitiierten Sendewünschen steuerbar ist und das
- wenigstens zwei zentrale, unabhängig voneinander betreibbare Langwellensender (13),
- zumindest zwei jeweils einem der Langwellensender (13) zugeordnete Zentraleinheiten (15), die jeweils zur Steuerung des Sendebetriebs wenigstens eines Langwellensenders (13) in Abhängigkeit von den kundeninitiierten Sendewünschen ausgebildet sind,
- eine Vielzahl von dezentralen, jeweils zur Übermittlung der kundeninitiierten Sendewünsche an jede der Zentraleinheiten (15) ausgebildeten Kundenstationen (17b, 17c), und
- eine Vielzahl von dezentralen, im Empfangsgebiet stationierten Funkempfängern (19) umfasst, denen jeweils wenigstens ein zu steuerndes Kunden-Endgerät (11) zugeordnet ist,
wobei jedem Funkempfänger (19) in Abhängigkeit von seinem Standort zumindest eine der Zentraleinheiten (15) zugeordnet ist und die kundeninitiierten Sendewünsche automatisch ausgeführt werden, indem
- an den Kundenstationen (17b, 17c) Kommunikationsverbindungen (21) zu den Zentraleinheiten (15) aufgebaut und die Sendewünsche an die Zentraleinheiten (15) übermittelt werden, die jeweils den Sendebetrieb desjenigen Langwellensenders (13) steuern, dessen Funk-Steuertelegramme von dem jeweils gewünschten Funkempfänger empfangen werden können, und
- den Sendewünschen entsprechende Funk-Steuertelegramme (23) in Abhängigkeit von automatisch mittels der Zentraleinheiten (15) entsprechend den Sendewünschen erzeugten und an die Langwellensender (13) übermittelten Steuerbefehlen (41) ausgesandt werden, und
- die den Funkempfängern (19) zugeordneten Kunden-Endgeräte (11) automatisch entsprechend den empfangenen Funk-Steuertelegrammen (23) gesteuert werden.

21. Verfahren nach Anspruch 20.
**dadurch gekennzeichnet,**
**dass** die zu steuernden Kunden-Endgeräte (11) an den Kundenstationen (17b, 17c) ausgewählt werden und jeweils automatisch in Abhängigkeit von dem Standort des betreffenden Funkempfängers (19) eine Kommunikationsverbindung (21) zu der dem Funkempfänger (19) zugeordneten Zentraleinheit (15) aufgebaut wird.

22. Verfahren nach Anspruch 20 oder 21,
**dadurch gekennzeichnet,**
**dass** bei gleichzeitig mehrere Kunden Endgeräte (11) betreffenden Sendewünschen automatisch Kommunikationsverbindungen (21) zu allen den betreffenden Funkempfängern (19) zugeordneten Zentraleinheiten (15) aufgebaut werden.

23. Verfahren nach einem der Ansprüche 20 bis 22,
**dadurch gekennzeichnet,**
**dass** zumindest einer Zentraleinheit (15) wenigstens zwei insbesondere am selben Ort befindliche Langwellensender (13) zugeordnet sind, mit denen in Abhängigkeit von den Sendewünschen Funk-Steuertelegramme (23) auf unterschiedlichen Langwellenfrequenzen gleichzeitig oder zeitversetzt ausgesandt werden, wobei vorzugsweise die Sendegebiete der Langwellensender (13) im Wesentlichen identisch sind oder einander zumindest weitgehend überlappen.

24. Verfahren nach einem der Ansprüche 20 bis 23,
**dadurch gekennzeichnet,**
**dass** in Abhängigkeit von den Sendewünschen inhaltlich übereinstimmende Funk-Steuertelegramme (23) mit unterschiedlichen Langwellenfrequenzen gleichzeitig oder zeitversetzt ausgesandt werden.

25. Verfahren nach einem der Ansprüche 20 bis 24,
**dadurch gekennzeichnet,**
**dass** mittels der Funk-Steuertelegramme (23) Informationen an die Kunden-Endgeräte (11) übermittelt und die übermittelten Informationen an den Kunden-Endgeräten (11) insbesondere optisch angezeigt oder dargestellt werden.

26. Verfahren nach einem der Ansprüche 20 bis 25,
**dadurch gekennzeichnet,**
**dass** zwischen Einzelkunden und Großkunden unterschieden wird, wobei den Einzelkunden wenigstens ein systemeigenes Portal (29), insbesondere ein Internet-Server, zur Verfügung gestellt wird und für Großkunden Kommunikationsanbindungen für kundeneigene Portale (31), insbesondere für kundeneigene Server, bereitgestellt werden.

27. Verfahren nach einem der Ansprüche 20 bis 26,
**dadurch gekennzeichnet,**
**dass** mittels der Funk-Steuertelegramme (23) die Kunden-Endgeräte (11) hinsichtlich eines automatisch ablaufenden, endgerätespezifischen Zeitschaltschemas programmiert und/oder parametrisiert werden.

28. Verfahren nach einem der Ansprüche 20 bis 27,
**dadurch gekennzeichnet,**
**dass** mittels der Funk-Steuertelegramme (23) in den Kunden-Endgeräten (11) Schaltvorgänge ausgelöst werden.

29. Verfahren nach einem der Ansprüche 20 bis 28,
**dadurch gekennzeichnet,**
**dass** es zur Tarif- und/oder Laststeuerung verwendet wird.

30. Verfahren nach einem der Ansprüche 20 bis 29,
**dadurch gekennzeichnet,**
**dass** die Funkempfänger (19) mittels der Langwellensender (13) in vorgebbaren Zeitabständen in Bezug auf ein vorgegebenes Zeitnormal synchronisiert werden.

31. Verfahren nach einem der Ansprüche 20 bis 30,
**dadurch gekennzeichnet,**
**dass** die ausgesandten Funk-Steuertelegramme (23) insbesondere mittels eines Kontroll-Funkempfängers (37) auf ihre korrekte Aussendung hin überprüft werden und ein als entweder überhaupt nicht oder als fehlerhaft ausgesandt identifiziertes Funk-Steuertelegramm (23) wenigstens einmal erneut ausgesandt wird.

## Claims

1. A radio ripple control system for the control of a plurality of decentralized customer terminals (11) in dependence on customer-initiated transmission requests by means of central longwave transmission devices (12), comprising
- at least two central longwave transmitters (13) operable independently of one another;
- at least two central units (15) which are each associated with one of the longwave transmitters (13) and which are designed in each case for the control of the transmission operation of at least one longwave transmitter (13) in dependence on the customer-initiated transmission requests;
- a plurality of decentralized customer stations (17b, 17c) each designed for the transmission of the customer-initiated transmission requests to each of the central units (15); and
- a plurality of decentralized radio receivers (19) which are stationed in the reception region, with at least one customer terminal (11) to be controlled being associated with each of the decentralized radio receivers, each of the decentralized radio receivers (19) being associated in dependence on its location with at least one of the central units (15),
wherein the respective transmission requests relating to at least one radio receiver (19) can automatically be transmitted to the corresponding central unit (15), which controls the transmission operation of that longwave transmitter (13) whose radio control telegrams can be received by the respective desired radio receiver, via communication connections (21) which can be established at the customer stations (17b, 17c); and
wherein radio control telegrams (23) corresponding to the transmission requests can be transmitted automatically in dependence on control commands (41) generated by means of the central units (15) and transmitted to the longwave transmitters (13).

2. A system in accordance with claim 1, **characterized in that** the communication connections (21) can be set up between at least some of the customer stations (17b, 17c) and the central units (15) via the Internet (25).

3. A system in accordance with claim 1 or claim 2, **characterized in that** the communication connections (21) can be set up between at least some of the customer stations (17b, 17c) and the central units (15) via an existing telecommunications network, in particular via a telephone landline and/or a mobile radio network.

4. A system in accordance with any one of the preceding claims, **characterized in that** at least some of the communication connections (21) between the customer stations (17b, 17c) and the central units (15) can be set up while using the networks or protocols Datex-P, ISDN, DSL, UMTS, GSM, GPRS, EDGE, 3GSM, X.25, X.75, IP and/or TCP.

5. A system in accordance with any one of the preceding claims, **characterized in that** several customer terminals (11), and in particular a plurality of customer terminals (11), can be simultaneously controlled alternatively individually or group-wise with one transmission request.

6. A system in accordance with any one of the preceding claims, **characterized in that** the central units (15) are arranged in spatial proximity to their respective longwave transmitter (13).

7. A system in accordance with any one of the preceding claims, **characterized in that** at least one central monitoring unit (27) is provided with which communication connections (21) can be set up to all central units (15), with the monitoring unit (27) preferably being spatially separated from the central units (15) and from the longwave transmitters (13).

8. A system in accordance with any one of the preceding claims, **characterized in that** the central units (15) each include a redundant computer system having a main computer and at least one parallel computer.

9. A system in accordance with any one of the preceding claims, **characterized in that** the transmission requests each include a pre-settable transmission priority and/or desired transmission time.

10. A system in accordance with claim 9, **characterized in that** the transmission requests can automatically be brought by means of the central units (15) into a transmission order dependent on the transmission priorities and/or on the desired transmission times.

11. A system in accordance with any one of the preceding claims, **characterized in that** transmission requests incoming at the central units (15) and having a pre-determined transmission priority can automatically be delayed in time.

12. A system in accordance with any one of the preceding claims, **characterized in that** alternatively a one-time or periodic transmission of radio control telegrams (23) can be initiated by means of the transmission requests, with alternatively, preferably in the case of a one-time transmission, an immediate transmission or a transmission taking place at a pre-settable time can be initiated.

13. A system in accordance with any one of the preceding claims, **characterized in that** successive radio control telegrams (23) of at least one central longwave transmission device (12), and preferably of every central longwave transmission device (12), can be transmitted at a time interval of approximately 1 sec.

14. A system in accordance with any one of the preceding claims, **characterized in that** switch devices with switching functions are provided as controllable customer terminals (11), with the switch devices preferably being able to be switched on and off by means of the radio control telegrams (23).

15. A system in accordance with any one of the preceding claims, **characterized in that** domestic technical equipment is provided as the controllable customer terminals (11), in particular equipment in private households which can be switched, programmed and or parameterized.

16. A system in accordance with any one of the preceding claims, **characterized in that** lighting equipment is provided as the controllable customer terminals (11), in particular streetlights, store lighting, shop window lighting and advertising lighting.

17. A system in accordance with any one of the preceding claims, **characterized in that** optical and/or acoustic signal equipment is provided as the controllable customer terminals (11), in particular siren plants.

18. A system in accordance with any one of the preceding claims, **characterized in that** equipment is provided as the controllable customer terminals (11) for the display or presentation, in particular the optical display or presentation, of information transmitted by means of the radio control telegrams (23).

19. A system in accordance with any one of the preceding claims, **characterized in that** the customer stations (17b, 17c) include PCs and/or laptops with software for the input and transmission of transmission requests.

20. A method for the operation of a radio ripple control system with which a plurality of decentralized customer terminals (11) can be controlled by means of central longwave transmission devices (12) in dependence on customer-initiated transmission requests and which comprises
- at least two central longwave transmitters (13) operable independently of one another;
- at least two central units (15) which are each associated with one of the longwave transmitters (13) and which are designed in each case for the control of the transmission operation of at least one longwave transmitter (13) in dependence on the customer-initiated transmission requests;
- a plurality of decentralized customer stations (17b, 17c) designed for the transmission of the customer-initiated transmission requests to the central units (15); and
- a plurality of decentralized radio receivers (19) which are stationed in the reception region, with each of which at least one customer terminal (11) to be controlled is associated,
wherein at least one of the central units (15) is associated with each radio receiver (19) in dependence on its location and the customer-initiated transmission requests are carried out automatically, in that
- communication connections (21) can be set up to the central units (15) at the customer stations (17b, 17c) and the transmission requests are transmitted to the central units (15) which each control the transmission operation of that longwave transmitter (13) whose radio control telegrams can be received by the respective desired radio receiver;
- radio control telegrams (23) corresponding to the transmission requests are transmitted in dependence on control commands (41) generated automatically by means of the central units (15) in accordance with the transmission requests and transmitted to the longwave transmitters (13); and
- the customer terminals (11) associated with the radio receivers (19) are controlled automatically in accordance with the received radio control telegrams (23).

21. A method in accordance with claim 20, **characterized in that** the customer terminals (11) to be controlled are selected at the customer stations (17b, 17c) and a communication connection (21) is set up automatically in each case to the central unit (15) associated with the radio receiver (19) in dependence on the location of the respective radio receiver (19).

22. A method in accordance with claim 20 or claim 21, **characterized in that**, with transmission requests relating to a plurality of customer terminals (11) simultaneously, communication connections (21) are automatically set up to all central units (15) associated with the respective radio receivers (19).

23. A method in accordance with any one of the claims 20 to 22, **characterized in that** at least two longwave transmitters (13), in particular located at the same place, are associated with at least one central unit (15) and with which radio control telegrams (23) are transmitted simultaneously or offset in time on different longwave frequencies in dependence on the transmission requests, with the transmission regions of the longwave transmitters (13) preferably being substantially identical or at least largely overlapping one another.

24. A method in accordance with any one of the claims 20 to 23, **characterized in that** radio control telegrams (23) which agree in content are transmitted simultaneously or offset in time at different longwave frequencies in dependence on the transmission requests.

25. A method in accordance with any one of the claims 20 to 24, **characterized in that** information is transmitted to the customer terminals (11) by means of the radio control telegrams (23) and the transmitted information is displayed or represented, in particular optically, at the customer terminals (11).

26. A method in accordance with any one of the claims 20 to 25, **characterized in that** differentiation is made between single customers and large customers, with at least one system-inherent portal (29), in particular an Internet server, being made available to the individual customers and communication links for customer's own portals (31), in particular for customer's own servers, being made available for large customers.

27. A method in accordance with any one of the claims 20 to 26, **characterized in that** the customer terminals (11) are programmed and/or parameterized by means of the radio control telegrams (23) with respect to an automatically running time switching scheme specific to the terminal.

28. A method in accordance with any of the claims 20 to 27, **characterized in that** switching processes are triggered in the customer terminals (11) by means of the radio control telegrams (23).

29. A method in accordance with any one of the claims 20 to 28, **characterized in that** it is used for tariff and/or load control.

30. A method in accordance with any one of the claims 20 to 29, **characterized in that** the radio receivers (19) are synchronized with respect to a pre-determined time standard at pre-settable time intervals by means of the longwave transmitters (13).

31. A method in accordance with any one of the claims 20 to 30, **characterized in that** the transmitted radio telegrams (23) are checked, in particular by means of a monitoring radio receiver (37), as to their correct transmission and a radio control telegram (23) identified as not transmitted not at all or as defectively transmitted is transmitted again at least once.

## Revendications

1. Système de télécommande centralisé pour radiodiffusion, destiné à commander une multitude d'appareils clients terminaux décentralisés (11) en fonction des désirs d'émission initialisés par les clients au moyen de dispositifs émetteurs centraux à ondes longues (12), comportant
- au moins deux émetteurs à ondes longues (13) centraux susceptibles de fonctionner indépendamment l'un de l'autre,
- au moins deux unités centrales (15) associées chacune à l'un des émetteurs à ondes longues (13), qui sont réalisées chacune pour commander le mode d'émission d'au moins un émetteur à ondes longues (13) en fonction des désirs d'émission initialisés par les clients,
- une multitude de stations clients (17b, 17c) décentralisées réalisées chacune pour transmettre les désirs d'émission initialisés par les clients à chacune des unités centrales (15), et
- une multitude de récepteurs radio (19) décentralisés stationnés dans la région de réception à chacun desquels est associé au moins un appareil client terminal (11) à commander et qui sont associés chacun à l'une au moins des unités centrales (15), en fonction de leur emplacement d'installation,
dans lequel les désirs d'émission concernant chacun au moins un récepteur radio (19) sont transmissibles automatiquement à l'unité centrale correspondante (15) via des liaisons de communication (21) susceptibles d'être établies vers les stations clients (17b, 17c), unité qui commande le mode d'émission de celui des émetteurs à ondes longues (13) dont les télégrammes de commande radio peuvent être reçus par le récepteur radio respectif désiré, et
dans lequel des télégrammes de commande radio (23) correspondant aux désirs d'émission peuvent être envoyés automatiquement en fonction d'ordres de commande (41) générés au moyen des unités centrales (15) et transmis aux émetteurs à ondes longues (13).

2. Système selon la revendication 1,
**caractérisé en ce que**
les liaisons de communication (21) entre quelques-unes au moins des stations clients (17b, 17c) et les unités centrales (15) sont susceptibles d'être établies via l'Internet.

3. Système selon la revendication 1 ou 2,
**caractérisé en ce que**
les liaisons de communication (21) entre quelques-unes au moins des stations clients (17b, 17c) et les unités centrales (15) sont susceptibles d'être établies via un réseau de télécommunication existant, en particulier via un réseau téléphonique fixe et/ou via un réseau téléphonique mobile.

4. Système selon l'une des revendications précédentes,
**caractérisé en ce que**
quelques-unes au moins des liaisons de communication (21) entre les stations clients (17b, 17c) et les unités centrales (15) sont susceptibles d'être établies en exploitant les réseaux ou protocoles que sont Datex-P, ISDN, DSL, UMTS, GSM, GPRS, EDGE, 3GSM, X.25, X.75, IP et/ou TCP.

5. Système selon l'une des revendications précédentes,
**caractérisé en ce que**
au moyen d'un seul désir d'émission plusieurs appareils clients terminaux (11) et en particulier une multitude de ceux-ci peuvent être commandés simultanément au choix individuellement ou par groupes.

6. Système selon l'une des revendications précédentes,
**caractérisé en ce que**
les unités centrales (15) sont agencées à proximité dans l'espace de leur émetteur à ondes longues (13) respectif.

7. Système selon l'une des revendications précédentes,
**caractérisé en ce que**
il est prévu au moins une unité de contrôle centrale (27) par laquelle des liaisons de communication (21) vers toutes les unités centrales (15) peuvent être établies, et de préférence l'unité de contrôle (27) est séparée dans l'espace vis-à-vis des unités centrales (15) et des émetteurs à ondes longues (13).

8. Système selon l'une des revendications précédentes,
**caractérisé en ce que**
les unités centrales (15) comprennent chacune un système de calcul redondant pourvu d'un ordinateur principal et d'au moins un ordinateur parallèle.

9. Système selon l'une des revendications précédentes,
**caractérisé en ce que**
les désirs d'émission présentent chacun une priorité d'émission prédéterminée et/ou un temps d'émission désiré.

10. Système selon la revendication 9,
**caractérisé en ce que**
les désirs d'émission sont susceptibles d'être amenés, au moyen des unités centrales (15), automatiquement dans un ordre de succession d'émission qui dépend des priorités d'émission et/ou des temps d'émission désirés.

11. Système selon l'une des revendications précédentes,
**caractérisé en ce que**
des désirs d'émission rentrant auprès des unités centrales (15) et présentant une priorité d'émission prédéterminée peuvent être retardés automatiquement dans le temps.

12. Système selon l'une des revendications précédentes,
**caractérisé en ce que**
au moyen des désirs d'émission peut être initialisé l'envoi de télégrammes de commande radio (23), au choix unique ou périodique, et de préférence dans le cas d'un envoi unique une émission immédiate ou ayant lieu à un instant prédéterminé peut être initialisée au choix.

13. Système selon l'une des revendications précédentes,
**caractérisé en ce que**
des télégrammes de commande radio (23) successifs d'au moins un et de préférence de chaque dispositif d'émission à ondes longues (12) central sont susceptibles d'être envoyés à un intervalle temporel d'environ 1 seconde.

14. Système selon l'une des revendications précédentes,
**caractérisé en ce que**
il est prévu à titre d'appareils clients terminaux à commande (11) des appareils de commutation présentant des fonctions de commutation, les appareils de commutation pouvant de préférence être mis en marche et coupés au moyen des télégrammes de commande radio (23).

15. Système selon l'une des revendications précédentes,
**caractérisé en ce que**
il est prévu à titre d'appareils clients terminaux à commande (11) des appareils de domotique, en particulier des dispositifs susceptibles d'être commutés, programmés et/ou paramétrés dans des domiciles privés.

16. Système selon l'une des revendications précédentes,
**caractérisé en ce que**
il est prévu à titre d'appareils clients terminaux à commande (11) des dispositifs d'éclairage, en particulier des éclairages de route, de magasin, de vitrines et de publicité.

17. Système selon l'une des revendications précédentes,
**caractérisé en ce que**
il est prévu à titre d'appareils clients terminaux à commande (11) des dispositifs de signalisation optiques et/ou acoustiques, en particulier des installations de sirène.

18. Système selon l'une des revendications précédentes,
**caractérisé en ce que**
il est prévu à titre d'appareils clients terminaux à commande (11) des dispositifs pour l'affichage ou la représentation en particulier optique d'informations transmises via les télégrammes de commande radio (23).

19. Système selon l'une des revendications précédentes,
**caractérisé en ce que**
les stations clients (17b, 17c) comprennent des ordinateurs personnels et/ou des ordinateurs portables pourvus d'un logiciel pour entrer et transmettre des désirs d'émission.

20. Procédé pour faire fonctionner un système de télécommande centralisé pour radiodiffusion, au moyen duquel on peut commander une multitude d'appareils clients terminaux décentralisés (11) en fonction des désirs d'émission initialisés par les clients, au moyen de dispositifs émetteurs centraux à ondes longues (12), et qui comporte
- au moins deux émetteurs à ondes longues (13) centraux susceptibles de fonctionner indépendamment l'un de l'autre,
- au moins deux unités centrales (15) associées chacune à l'un des émetteurs à ondes longues (13), qui sont réalisées chacune pour commander le mode d'émission d'au moins un émetteur à ondes longues (13) en fonction des désirs d'émission initialisés par les clients,
- une multitude de stations clients (17b, 17c) décentralisées réalisées chacune pour transmettre les désirs d'émission initialisés par les clients à chacune des unités centrales (15), et
- une multitude de récepteurs radio (19) décentralisés stationnés dans la région de réception, à chacun desquels est associé au moins un appareil client terminal (11) à commander,
à chaque récepteur radio (19) étant associée l'une au moins des unités centrales (15), en fonction de son emplacement d'installation, et les désirs d'émission initialisés par les clients étant exécutés automatiquement, du fait que
- au niveau des stations clients (17b, 17c), des liaisons de communication (21) sont établies vers les unités centrales (15), et les désirs d'émission sont transmis aux unités centrales (15) qui commandent chacune le mode d'émission de celui des émetteurs à ondes longues (13) dont les télégrammes de commande radio peuvent être reçus par le récepteur radio respectif désiré, et
- des télégrammes de commande radio (23) correspondant aux désirs d'émission sont envoyés en fonction d'ordres de commande (41) générés automatiquement au moyen des unités centrales (15) en correspondance des désirs d'émission et transmis aux émetteurs à ondes longues (13), et
- les appareils clients terminaux (11) associés aux récepteurs radio (19) sont commandés automatiquement en correspondance des télégrammes de commande radio reçus (23).

21. Procédé selon la revendication 20,
**caractérisé en ce que**
l'on sélectionne les appareils clients terminaux (11) à commander au niveau des stations clients (17b, 17c), et **en ce que** l'on établit automatiquement une liaison de communication (21) avec l'unité centrale (15) associée au récepteur radio (19), en fonction de l'emplacement d'installation du récepteur radio (19) concerné respectif.

22. Procédé selon la revendication 20 ou 21,
**caractérisé en ce que**
pour des désirs d'émission concernant simultanément plusieurs appareils clients terminaux (11), on établit automatiquement des liaisons de communication (21) vers toutes les unités centrales (15) associées aux récepteurs radio concernés (19).

23. Procédé selon l'une des revendications 20 à 22,
**caractérisé en ce que**
à l'une au moins des unités centrales (15) sont associés aux moins deux émetteurs à ondes longues (13) situés en particulier au même endroit, au moyen desquels, en fonction des désirs d'émission, des télégrammes de commande radio (23) sont envoyés soit simultanément à différentes fréquences d'ondes longues soit de façon décalé dans le temps, et de préférence les régions d'émission des émetteurs à ondes longues (13) sont sensiblement identiques ou se chevauchent au moins largement.

24. Procédé selon l'une des revendications 20 à 23,
**caractérisé en ce que**
en fonction des désirs d'émission, des télégrammes de commande radio (23) dont les contenus coïncident sont envoyés soit simultanément à différentes fréquences d'ondes longues soit de façon décalée dans le temps.

25. Procédé selon l'une des revendications 20 à 24,
**caractérisé en ce que**
au moyen des télégrammes de commande radio (23), des informations sont transmises aux appareils clients terminaux (11), et les informations transmises sont affichées ou représentées en particulier par voie optique sur les appareils clients terminaux (11).

26. Procédé selon l'une des revendications 20 à 25,
**caractérisé en ce que**
on fait la distinction entre des clients individuels et des clients grossistes, et on met à la disposition des clients individuels au moins un portail (29) propre au système, en particulier un serveur Internet, et on met à la disposition des clients grossistes des liaisons de communication pour des portails (31) propres aux clients, en particulier pour des serveurs propres aux clients.

27. Procédé selon l'une des revendications 20 à 26,
**caractérisé en ce que**
au moyen des télégrammes de commande radio (23), les appareils clients terminaux (11) sont programmés et/ou paramétrés à l'égard d'un schéma de fonctionnement temporel qui se déroule automatiquement et qui est spécifique aux appareils terminaux.

28. Procédé selon l'une des revendications 20 à 27,
**caractérisé en ce que**
au moyen des télégrammes de commande radio (23), on déclenche des opérations de commutation dans les appareils clients terminaux (11).

29. Procédé selon l'une des revendications 20 à 28,
**caractérisé en ce que**
on l'utilise pour la commande du tarif et/ou de la charge.

30. Procédé selon l'une des revendications 20 à 29,
**caractérisé en ce que**
les récepteurs radio (19) sont synchronisés par rapport à une normale de temps prédéterminée au moyen des émetteurs à ondes longues (13) dans des intervalles temporels prédéterminés.

31. Procédé selon l'une des revendications 20 à 30,
**caractérisé en ce que**
les télégrammes de commande radio (23) envoyés sont vérifiés en particulier au moyen d'un récepteur radio de contrôle (37) à l'égard de leur envoi correct, et un télégramme de commande radio (23) identifié comme n'étant pas envoyé du tout ou comme étant envoyé de façon erronée est renvoyé au moins une nouvelle fois.
